# EUROPÄISCHE PATENTSCHRIFT

(11) **EP 4 209 699 B1**
(45) Veröffentlichungstag und Bekanntmachung des Hinweises auf die Patenterteilung: **26.11.2025**
(21) Anmeldenummer: 22150928.4
(22) Anmeldetag: 11.01.2022
(51) Int. Cl.: F16L 27/12, F16L 13/14

(54) **ANSCHLUSSSTÜCK FÜR EIN ROHR, FITTING UND VERWENDUNG EINES ANSCHLUSSSTÜCKS**
CONNECTOR FOR A PIPE, FITTING AND USE OF A CONNECTOR
PIÈCE DE RACCORD POUR UN TUBE, RACCORD ET UTILISATION D'UNE PIÈCE DE RACCORD

(43) Veröffentlichungstag der Anmeldung: 12.07.2023
(73) Patentinhaber: RK Infra GesmbH, 4300 St. Valentin (AT)
(72) Erfinder: Wedl, Gerald, 3161 St. Veit an der Gölsen (AT); Neuhuber, Otmar, 4733 Heiligenberg (AT)
(74) Vertreter: Ege Lee & Roider Patentanwälte

(56) Entgegenhaltungen:
- WO-A1-2020/124123
- CH-A- 383 707
- DE-A1- 19 914 061
- US-A- 3 381 981

## Beschreibung

Die Erfindung betrifft ein Anschlussstück für ein Rohr, insbesondere Kunststoffrohr oder Kunststoffverbundrohr. Außerdem betrifft die Erfindung ein Fitting für ein Rohr und eine Verwendung des Anschlussstücks.

Bei baustellenseitiger Installation von Rohrleitungssystemen wird üblicherweise für das Leiten und Führen eines Fluids ein aus Rohrabschnitten und Fittings bestehendes Rohrleitungssystem installiert. Als Fitting kann ein Verbindungsstück bzw. Anschlussstück einer Rohrleitung verstanden werden, welches als Verbindung von zwei oder mehreren Rohrabschnitten dient. Auch bei der Instandhaltung und Reparatur von Rohrabschnitten werden Fittings eingesetzt, um einen auszutauschenden Rohrabschnitt zu ersetzen oder eine Abzweigung zu installieren. Zum Verbinden der Rohrabschnitte mit dem Fitting werden Pressverbindungen genutzt. Aufgrund der für das Rohrende bzw. für die Pressverbindung vorhandenen Anschlagfläche des Fittings erweist sich das Einsetzen der Fittings jedoch als sehr mühsam oder ist aufgrund der baulichen Gegebenheit sogar unmöglich. Insbesondere muss ein hinreichend großer Abstand zwischen zwei gegenüberliegenden Rohrleitungsenden vorgesehen werden, um ein Fitting überhaupt in beide Rohrenden einschieben zu können. Dies erfordert einen erhöhten Platzbedarf oder eine weiträumige Ausgrabung der Rohrleitung. Eine Installation des Fittings in engen Baubereichen ist somit nicht möglich.

Beispielsweise ist aus dem Dokument DE 10 2008 027 382 A1 ein Pressfitting bekannt. Das Pressfitting weist einen Anschlusskörper mit einer Stützhülse auf, die in ein freies Ende eines Rohrs eingesetzt werden kann. Das Pressfitting weist ferner eine mit der Stützhülse einstückig ausgebildeten, ringförmigen Bund mit einer ringförmigen Anschlagfläche auf, um den Rand des freien Rohrendes in Anschlag aufzunehmen. Weiterer technologischer Hintergrund können der CH 383 707 A, der WO 2020/124123 A1, der US 3 381 981 A sowie der DE 199 14 061 A1 entnommen werden.

Der Erfindung liegt die Aufgabe zugrunde, ein eingangs genanntes Anschlussstück strukturell und/oder funktionell zu verbessern. Außerdem liegt der Erfindung die Aufgabe zugrunde, ein eingangs genanntes Fitting strukturell und/oder funktionell zu verbessern. Ferner liegt der Erfindung die Aufgabe zugrunde, eine Verwendung eines Anschlussstücks funktionell zu verbessern.

Die Aufgabe wird gelöst mit einem Anschlussstück mit den Merkmalen des Anspruchs 1. Außerdem wird die Aufgabe gelöst mit einem Fitting mit den Merkmalen des Anspruchs 12. Die Aufgabe wird ferner gelöst mit einer Verwendung eines Anschlussstücks mit den Merkmalen des Anspruchs 13 sowie mit einer Verwendung eines Anschlussstücks mit den Merkmalen des Anspruchs 15. Vorteilhafte Ausführungen und/oder Weiterbildungen sind Gegenstand der Unteransprüche.

Ein Anschlussstück kann für ein Rohr sein und/oder zum Anschluss an zumindest ein Rohr, beispielsweise zum Anschluss an zumindest ein Rohrende, ausgebildet sein. Das Rohr kann ein thermisch gedämmtes und/oder flexibles Leitungsrohr sein. Das Rohr kann ein Kunststoffrohr oder Kunststoffverbundrohr oder ein Mehrschichtrohr, wie Mehrschichtkunststoffrohr, oder ein faserverstärktes Kunststoffrohr oder ein Kunststoff-Metall-Verbundrohr sein. Das Rohr und/oder das Anschlussstück kann zum Transport von unterschiedlichen Medien, wie beispielsweise flüssige oder gasförmige Medien, wie Wasser, z.B. Heizwasser oder Kühlwasser, oder Öl, wie Rohöl oder Erdöl, oder Gas, wie Rohgas oder Erdgas, dienen und/oder ausgebildet sein. Das Rohr und/oder das Anschlussstück kann zum Einsatz bei Wasser-, Öl- oder Gasnetzen bzw. Wasser-, Öl- oder Gasleitungen dienen und/oder ausgebildet sein. Das Rohr und/oder das Anschlussstück kann zum Einsatz bei der Onshore- oder Offshore-Förderung bzw. dem Onshore- oder Offshore-Transport für den Transport eines Mediums an Land bzw. über dem Meeresboden dienen und/oder ausgebildet sein. Das Rohr und/oder das Anschlussstück kann zum Einsatz in Nah- oder Fernwärmenetzen bzw. Nah- oder Fernwärmeleitungen dienen und/oder ausgebildet sein. Das Rohr und/oder das Anschlussstück kann zum Einsatz bei Geothermienetzen bzw. Geothermieleitungen dienen und/oder ausgebildet sein.

Das Anschlussstück kann ein Fitting, beispielsweise Pressfitting, sein oder ein Teil davon sein. Das Anschlussstück kann ausgebildet sein, um mit einer Hülse, wie Presshülse, und/oder mit zumindest einem Rohrende verbunden, beispielsweise verpresst, zu werden.

Das Anschlussstück weist einen Grundkörper auf. Der Grundkörper kann im Wesentlichen rohrförmig und/oder zylinderförmig und/oder hülsenförmig ausgebildet sein. Der Grundkörper kann hohlzylinderförmig und/oder als Hohlzylinder ausgebildet sein. Der Grundkörper kann einen Durchlass, insbesondere für das Medium, wie beispielsweise flüssige oder gasförmige Medium, bzw. für das durch das Rohr zu transportierende Medium, wie Fluid und/oder Gas, aufweisen. Der Durchlass kann ein Mediumdurchlass oder Fluiddurchlass sein. Der Durchlass kann eine Bohrung, wie Durchgangsbohrung, und/oder ein Kanal, insbesondere von zumindest einem Ende zum zumindest einen anderen Ende des Grundkörpers, sein. Der Grundkörper kann im Wesentlichen I-förmig oder T-förmig oder kreuzförmig oder L-förmig ausgebildet sein.

Der Grundkörper weist einen Basisabschnitt auf. Der Grundkörper und/oder der Basisabschnitt kann/können zum Einführen in ein Rohrende bzw. Ende des Rohrs ausgebildet sein. Der Grundkörper weist zumindest einen Stützabschnitt zum Einführen in ein Rohrende bzw. Ende des Rohrs auf. Der zumindest eine Stützabschnitt und der Basisabschnitt können benachbart zueinander und/oder nebeneinander angeordnet sein. Der zumindest eine Stützabschnitt kann an einem Ende des Grundkörpers angeordnet sein oder ein Ende des Grundkörpers ausbilden. Der Grundkörper kann zumindest einen Gewindeabschnitt aufweisen. Der zumindest einen Gewindeabschnitt kann ein Gewinde, beispielsweise Außengewinde, aufweisen. Der zumindest eine Gewindeabschnitt und der zumindest eine Stützabschnitt können benachbart zueinander und/oder nebeneinander angeordnet sein, beispielsweise direkt benachbart zueinander und/oder direkt nebeneinander angeordnet sein. Der zumindest eine Gewindeabschnitt kann zwischen dem Basisabschnitt und dem zumindest einen Stützabschnitt angeordnet sein. Der zumindest eine Stützabschnitt und/oder der zumindest eine Gewindeabschnitt und/oder der Basisabschnitt kann/können ausgebildet sein, um in ein Rohrende bzw. Ende des Rohrs eingeschoben zu werden. Der zumindest eine Stützabschnitt und/oder der zumindest eine Gewindeabschnitt und/oder der Basisabschnitt kann/können im Wesentlichen den gleichen Kerndurchmesser aufweisen. Der Grundkörper und/oder der Basisabschnitt und/oder der Gewindeabschnitt und/oder der Stützabschnitt kann/können eine Längsachse definieren und/oder aufweisen. Der Grundkörper, der Basisabschnitt, der Gewindeabschnitt und der Stützabschnitt können eine gemeinsame Längsachse definieren und/oder aufweisen.

Der Grundkörper kann zumindest zwei Stützabschnitte aufweisen. Die zumindest zwei Stützabschnitte können an gegenüberliegenden Enden des Grundkörpers angeordneten sein. Jeder Stützabschnitt kann ein Ende des Grundkörpers ausbilden. Diese Enden des Grundkörpers können gegenüberliegend angeordnet sein. Der Grundkörper kann zumindest zwei Gewindeabschnitte aufweisen. Jedem Stützabschnitt kann ein Gewindeabschnitt zugeordnet und/oder benachbart zu diesem, beispielsweise wie vorstehend beschrieben, angeordnet sein.

Der zumindest eine Stützabschnitt kann mehrere Abschnitte und/oder Schultern aufweisen. Die mehreren Abschnitte und/oder Schultern können gleiche oder unterschiedliche Durchmesser, insbesondere Außendurchmesser, aufweisen. Der zumindest eine Stützabschnitt kann zumindest eine, insbesondere mehrere, Rillen aufweisen. Der zumindest eine Stützabschnitt kann eine Verzahnung aufweisen. Die Verzahnung kann mehrere Zähne aufweisen. Die mehreren Zähne oder Rillen können sich in Umfangsrichtung erstecken und/oder im Wesentlichen senkrecht zur Längsachse, insbesondere zur Längsachse des zumindest einen Stützabschnitts, angeordnet sein. Die mehreren Zähne oder Rillen können zueinander parallel angeordnet sein. Der zumindest eine Stützabschnitt kann ausgebildet sein, um mit einer Hülse, wie Presshülse, und/oder mit zumindest einem Rohrende verbunden, beispielsweise verpresst oder verschweißt, zu werden. Der zumindest eine Stützabschnitt kann ein Pressabschnitt sein und/oder eine Presslänge definieren und/oder aufweisen. Die Presslänge kann in axialer Richtung verlaufen.

Der Grundkörper kann zumindest ein Anschlussabschnitt zum Anschließen, beispielsweise Anschweißen und/oder Verpressen, eines Rohrteils aufweisen. Der zumindest eine Anschlussabschnitt und der Basisabschnitt können benachbart zueinander angeordnet sein. Der zumindest eine Anschlussabschnitt kann an einem dem zumindest einen Stützabschnitt gegenüberliegenden Ende des Grundkörpers angeordnet sein oder das dem zumindest einen Stützabschnitt gegenüberliegende Ende des Grundkörpers ausbilden. Der zumindest eine Anschlussabschnitt kann im Wesentlichen senkrecht zu dem zumindest einen Stützabschnitt angeordnet sein. Der zumindest eine Anschlussabschnitt kann eine, beispielsweise ringförmige, Anschlagschulter aufweisen. Die Anschlagschulter kann ausgebildet sein, um mit einer Stirnfläche des Rohrendes zumindest abschnittsweise in Anschlag zu gelangen. Der zumindest eine Anschlussabschnitt kann einen Einführabschnitt zum Einführen in ein Rohrende bzw. Ende des Rohrs aufweisen. Der zumindest eine Anschlussabschnitt und/oder dessen Einführabschnitt kann eine Presslänge definieren bzw. aufweisen. Die Presslänge kann in axialer Richtung verlaufen. Der Einführabschnitt kann ein Pressabschnitt sein. Die Presslänge des zumindest einen Anschlussabschnitts kann der Presslänge des zumindest einen Stützabschnitts entsprechen. D.h., die Presslängen können gleich sein. Die Anschlagschulter und der Einführabschnitt können benachbart zueinander angeordnet sein. Die Anschlagschulter kann durch einen sich in radialer Richtung vergrößernden Bereich des Anschlussabschnitts ausgebildet sein. Die Anschlagschulter kann eine Ringschulter sein. Die Anschlagschulter kann einstückig mit dem zumindest einen Anschlussabschnitt und/oder Grundkörper ausgebildet sein. D.h., die Anschlagschulter kann mit dem zumindest einen Anschlussabschnitt und/oder Grundkörper aus einem Teil hergestellt sein. Der Einführabschnitt kann ausgebildet sein, um mit einer Hülse, wie Presshülse, und/oder mit zumindest einem Rohrende verbunden, beispielsweise verpresst oder verschweißt, zu werden.

Das Anschlussstück weist zumindest ein Anschlagelement auf. Das zumindest eine Anschlagelement kann mit dem Grundkörper und/oder mit dessen Gewindeabschnitt lösbar verbindbar und/oder verbunden sein und/oder werden. Die Verbindung zwischen dem Grundkörper bzw. Gewindeabschnitt und dem zumindest einen Anschlagelement kann zerstörungsfrei lösbar sein. Das zumindest eine Anschlagelement kann eine Anschlagfläche aufweisen. Das zumindest eine Anschlagelement und/oder dessen Anschlagfläche kann/können ausgebildet sein, mit einer Stirnfläche des Rohrendes und/oder einer Hülse, wie Presshülse, zumindest abschnittsweise in Anschlag zu gelangen. Das zumindest eine Anschlagelement und/oder dessen Anschlagfläche kann als Anschlag für die Stirnfläche des Rohrendes und/oder der Hülse, wie Presshülse, dienen bzw. wirken. Das zumindest eine Anschlagelement und/oder dessen Anschlagfläche kann ausgebildet sein, um den Rand des freien Endes des Rohrs in Anschlag aufzunehmen.

Die Anschlagfläche kann im Wesentlichen scheibenförmig und/oder ringförmig ausgebildet sein. Die Anschlagfläche kann im Wesentlichen senkrecht zur Längsachse sein und/oder stehen. Die Längsachse kann im Wesentlichen senkrecht zur Anschlagfläche sein und/oder stehen. Die Anschlagfläche kann auf der dem Stützabschnitt zugewandten Seite angeordnet sein. Das zumindest eine Anschlagelement kann im Wesentlichen scheibenförmig und/oder ringförmig und/oder zylinderförmig und/oder hülsenförmig ausgebildet sein. Das zumindest eine Anschlagelement kann eine Anschlagscheibe / Fixierscheibe und/oder ein Anschlagring / Fixierring und/oder eine Anschlaghülse / Fixierhülse sein. Das zumindest eine Anschlagelement kann koaxial zum Grundkörper und/oder Basisabschnitt und/oder Gewindeabschnitt und/oder Stützabschnitt angeordnet sein oder werden. Das zumindest eine Anschlagelement kann ausgebildet sein, den Grundkörper und/oder Basisabschnitt und/oder Gewindeabschnitt und/oder Stützabschnitt zu umschließen.

Das zumindest eine Anschlagelement kann entlang des Grundkörpers, beispielsweise entlang des Basisabschnitts, insbesondere in axialer Richtung, verschiebbar ausgebildet sein. Das zumindest eine Anschlagelement kann auf den Grundkörper und/oder dessen Basisabschnitt, insbesondere in axialer Richtung, aufgeschoben sein oder werden. Hierfür kann das zumindest eine Anschlagelement einen Durchlass aufweisen. Der Durchlass kann eine Bohrung, wie Durchgangsbohrung, sein. Der Grundkörper und/oder dessen Basisabschnitt und/oder Gewindeabschnitt kann/können sich abschnittsweise durch den Durchlass des zumindest einen Anschlagelements hindurch erstrecken. Der Grundkörper und/oder dessen Basisabschnitt und/oder Gewindeabschnitt kann/können durch den Durchlass des zumindest einen Anschlagelements geschoben werden bzw. das zumindest eine Anschlagelement kann mittels dessen Durchlass auf den Grundkörper und/oder dessen Basisabschnitt und/oder Gewindeabschnitt aufgeschoben sein oder werden. Der Durchlass des zumindest einen Anschlagelements kann koaxial zu dem Grundkörper und/oder dessen Basisabschnitt und/oder Gewindeabschnitt angeordnet sein oder werden. Der Durchlass des zumindest einen Anschlagelements kann koaxial zu dem Durchlass des Grundkörpers sein. Das zumindest eine Anschlagelement kann mit dem Grundkörper und/oder mit dessen Gewindeabschnitt verrastbar und/oder verschraubbar sein und/oder verrastet und/oder verschraubt sein. Das zumindest eine Anschlagelement kann einen Gewindeabschnitt mit einem Gewinde, insbesondere Innengewinde, aufweisen. Der Gewindeabschnitt kann sich im Durchlass des zumindest einen Anschlagelements befinden. Das Gewinde des zumindest einen Anschlagelements kann mit dem Gewinde des Grundkörpers bzw. des Gewindeabschnitts des Grundkörpers verschraubbar und/oder verschraubt sein.

Das Anschlussstück bzw. dessen Grundkörper kann mehrere Stützabschnitte aufweisen. Beispielsweise kann der Grundkörper zwei, drei, vier oder mehr Stützabschnitte aufweisen. Das Anschlussstück kann mehrere Anschlagelemente aufweisen. Beispielsweise kann das Anschlussstück zwei, drei, vier oder mehr Anschlagelemente aufweisen. Jedem Stützabschnitt kann ein Anschlagelement zugeordnet sein. Das Anschlussstück kann für jeden Stützabschnitt ein Anschlagelement aufweisen.

Der Grundkörper kann einteilig ausgebildet sein. D.h., der Grundkörper kann aus einem Teil hergestellt sein. Das zumindest eine Anschlagelement kann einteilig ausgebildet sein. D.h., dass das zumindest eine Anschlagelement aus einem Teil hergestellt sein kann. Das Anschlussstück kann mehrteilig, beispielsweise zweiteilig, ausgebildet sein. Der Grundkörper und das zumindest eine Anschlagelement können zwei voneinander getrennte bzw. getrennt hergestellte Teile sein. Das zumindest eine Anschlagelement kann als ein vom Grundkörper separates Teil ausgebildet sein. Der Grundkörper und/oder das zumindest eine Anschlagelement kann aus Metall, wie Stahl oder Edelstahl, und/oder aus Kunststoff hergestellt sein.

Das Anschlussstück kann ein Verbindungsstück und/oder eine Muffe bzw. muffenartig sein. Das Anschlussstück kann ein Abzweig bzw. eine Abzweigverbindung sein.

Ein Fitting kann zum Verbinden mit mindestens einem Rohr, insbesondere Kunststoffrohr oder Kunststoffverbundrohr, sein bzw. ausgebildet sein. Das mindestens eine Rohr kann wie vorstehend und/oder nachfolgend beschrieben ausgebildet sein. Das Fitting kann ein Pressfitting und/oder Steckfitting sein.

Das Fitting kann zumindest ein Anschlussstück umfassen. Das Anschlussstück kann wie vorstehend und/oder nachfolgend beschrieben ausgebildet sein.

Das Fitting kann zumindest eine Hülse umfassen. Die zumindest eine Hülse kann eine Presshülse sein. Die zumindest eine Hülse kann mit dem zumindest einen Stützabschnitt des Grundkörpers des Anschlussstücks und/oder mit dem Rohrende bzw. Ende des Rohrs verpressbar sein und/oder verpresst werden. Die zumindest eine Hülse kann an dem Anschlagelement des Anschlussstücks bzw. an dessen Anschlagfläche anschlagend anliegen und/oder ausgebildet sein, um an dem Anschlagelement bzw. an dessen Anschlagfläche in Anschlag zu gelangen bzw. anzuliegen. Die zumindest eine Hülse kann ringförmig und/oder zylinderförmig und/oder hülsenförmig ausgebildet sein. Die zumindest eine Hülse kann im Wesentlichen hohlzylinderförmig ausgebildet sein. Die zumindest eine Hülse kann einen Durchlass aufweisen. Der Durchlass kann eine Bohrung, wie Durchgangsbohrung, sein. Die zumindest eine Hülse kann koaxial zum Grundkörper und/oder Stützabschnitt angeordnet sein oder werden. Die zumindest eine Hülse kann ausgebildet sein, den Grundkörper und/oder den Stützabschnitt und/oder das Rohrende zu umschließen. Die zumindest eine Hülse kann ausgebildet sein, um auf das Rohrende vollständig oder zumindest abschnittsweise, insbesondere in axialer Richtung, aufgeschoben zu werden. Die zumindest eine Hülse kann aus Metall, wie Stahl oder Edelstahl, und/oder aus Kunststoff hergestellt sein.

Das Fitting kann zumindest ein Kunststoffelement aufweisen. Das zumindest eine Kunststoffelement kann, beispielsweise in radialer Richtung, zwischen dem Stützabschnitt des Grundkörpers und dem Rohr / Rohrende angeordnet sein oder werden. Das zumindest eine Kunststoffelement kann, beispielsweise in radialer Richtung, zwischen dem Rohr und der Hülse angeordnet sein oder werden. Das zumindest eine Kunststoffelement kann ausgebildet sein, um vollständig oder zumindest abschnittsweise in oder auf das Rohr/ Rohrende, insbesondere in axialer Richtung, geschoben zu werden. Das zumindest eine Kunststoffelement kann ausgebildet sein, um vollständig oder zumindest abschnittsweise auf den Stützabschnitt, insbesondere in axialer Richtung, geschoben zu werden. Das zumindest eine Kunststoffelement kann ringförmig und/oder zylinderförmig und/oder hülsenförmig ausgebildet sein. Das zumindest eine Kunststoffelement kann Kunststoffhülse sein. Das zumindest eine Kunststoffelement kann einen Durchlass aufweisen. Der Durchlass kann eine Bohrung, wie Durchgangsbohrung, sein. Das zumindest eine Kunststoffelement kann klauenförmig sein. Das zumindest eine Kunststoffelement kann zumindest eine / einen, beispielsweise mehrere, Klauenabschnitte und/oder Schlitze aufweisen. Die Klauenabschnitte und/oder Schlitze können sich in Längsrichtung und/oder Achsrichtung des Kunststoffelements erstrecken. Das zumindest eine Kunststoffelement kann koaxial zum Grundkörper und/oder Stützabschnitt angeordnet sein oder werden. Das zumindest eine Kunststoffelement kann ausgebildet sein, den Grundkörper und/oder Stützabschnitt und/oder das Rohr / Rohrende zu umschließen. Das zumindest eine Kunststoffelement kann ausgebildet sein, beispielsweise während und/oder nach einem Pressvorgang, in die Rillen und/oder Verzahnung des Stützabschnitts einzugreifen und/oder eingedrückt zu werden bzw. eingedrückt zu sein.

Ein System, wie Rohrsystem oder Rohrleitungssystem, kann zumindest ein Fitting umfassen. Das Fitting kann wie vorstehend und/oder nachfolgend ausgebildet sein. Das System kann zumindest ein Rohr, insbesondere Kunststoffrohr oder Kunststoffverbundrohr, aufweisen. Das mindestens eine Rohr kann wie vorstehend und/oder nachfolgend beschrieben ausgebildet sein. Das Fitting bzw. der Stützabschnitt des Anschlussstücks kann mit dem Rohr bzw. Rohrende / Ende des Rohrs verbunden sein oder werden. Die Hülse kann mit dem Fitting und dem Rohr bzw. Rohrende / Ende des Rohrs verbunden, insbesondere verpresst, sein oder werden.

Die Verpressung der Hülse mit dem Fitting und dem Rohr kann einen sicheren Halt des Rohrs auf dem Stützabschnitt gewährleisten und kann ferner zu einer starken kraftschlüssigen Verbindung oder Pressverbindung zwischen dem Stützabschnitt des Anschlussstücks und dem Rohr führen.

Eine Verwendung eines vorstehend und/oder nachfolgend beschriebenen Anschlussstücks und/oder Fittings kann zum Verbinden mit wenigstens einem Rohr, insbesondere Kunststoffrohr oder Kunststoffverbundrohr, sein und/oder dienen. Das mindestens eine Rohr kann wie vorstehend und/oder nachfolgend beschrieben ausgebildet sein.

Das Verbinden, beispielsweise Verschrauben, des zumindest einen Anschlagelements mit dem Grundkörper bzw. mit dessen Gewindeabschnitt kann nach dem Einführen des zumindest einen Stützabschnitts in das Rohrende bzw. Ende des Rohrs erfolgen.

Das Rohr, insbesondere das Rohrende bzw. Ende des Rohrs, kann mittels der Hülse mit dem zumindest einen Stützabschnitt des Grundkörpers verpresst werden, beispielsweise mittels eine Presswerkzeugs. Dabei kann die Hülse so im Wesentlichen radial nach innen umgeformt, insbesondere in radialer Richtung plastisch verformt, werden, dass eine dauerhafte und/oder dichte, gegebenenfalls sogar unlösbare, Verbindung zwischen Rohr und Anschlussstück bzw. Fitting hergestellt werden kann.

Eine Verwendung eines vorstehend und/oder nachfolgend beschriebenen Anschlussstücks und/oder Fittings und/oder Systems kann für ein Fernwärmenetz oder für Fernwärmeleitungen oder für den Transport von Öl, wie Rohöl oder Erdöl, Gas, wie Rohgas oder Erdgas, Wasser, wie Heizwasser oder Kühlwasser, Öl-Wasser-Gemisch, Öl-Gas-Gemisch oder anderen aus den genannten Stoffen kombinierte Gemische sein und/oder dienen.

Mit der Erfindung kann das Einsetzen des Anschlussstücks bzw. des Fittings deutlich vereinfacht und/der erleichtert werden. Insbesondere kann der Abstand zwischen zwei gegenüberliegenden Rohrleitungsenden kleiner sein, wodurch der Platzbedarf reduziert und weiträumige Ausgrabungen der Rohrleitung vermieden werden können. Eine Installation von Anschlussstücken bzw. Fittings in engen Baubereichen ist somit möglich.

Nachfolgend werden Ausführungsbeispiele der Erfindung unter Bezugnahme auf Figuren näher beschrieben, dabei zeigen schematisch und beispielhaft:
- Fig. 1: ein Anschlussstück gemäß einer Variante;
- Fig. 2: ein Anschlussstück gemäß einer weiteren Variante;
- Fig. 3: das Anschlussstück gemäß Fig. 2 in einer ersten in ein Rohr eingeschobenen Position;
- Fig. 4: das Anschlussstück gemäß Fig. 2 in einer zweiten Position;
- Fig. 5: das Anschlussstück gemäß Fig. 2 in einer dritten in ein Rohr eingeschobenen Position; und
- Fig. 6: das Anschlussstück gemäß Fig. 2 mit dem Anschlagelement im Anschlag mit dem Rohrende;

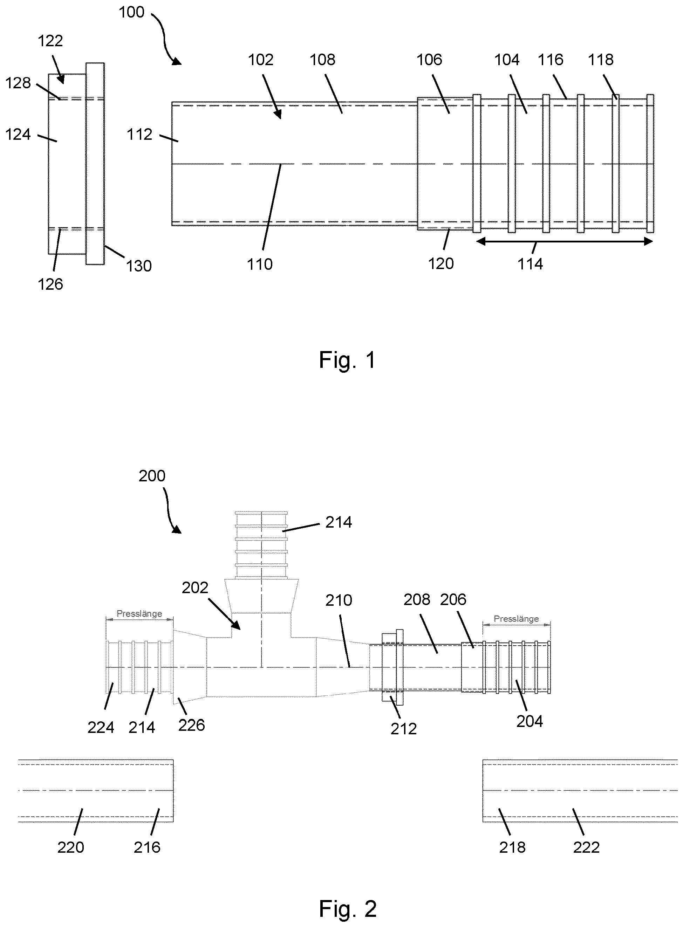

Fig. 1 zeigt ein Anschlussstück 100 gemäß einer Variante. Das Anschlussstück 100 zum Anschluss an ein Rohr, insbesondere Kunststoffrohr oder Kunststoffverbundrohr, ausgebildet. Das Anschlussstück 100 umfasst einen I-förmigen Grundkörper 102. Der Grundkörper 102 weist einen Stützabschnitt 104 zum Einführen in ein Rohrende des Rohrs, einen Gewindeabschnitt 106 und einen Basisabschnitt 108 auf. Der Gewindeabschnitt 106 ist einerseits benachbart zum Stützabschnitt 104 und andererseits benachbart zum Basisabschnitt 108 angeordnet. Bezüglich der Längsachse 110 ist der Gewindeabschnitt 106 in axialer Richtung zwischen dem Basisabschnitt 108 und dem Stützabschnitt 104 angeordnet. Der Gewindeabschnitt 106 schließt sich somit einerseits direkt an den Stützabschnitt 104 und andererseits an den Basisabschnitt 108 an.

Der Grundkörper 102 ist als rohrförmiger Hohlzylinder mit einem Durchlass 112 für das zu transportierende Medium ausgebildet. Der Durchlass 112 ist als Bohrung entlang der Längsachse 110 von einem Ende zum anderen Ende des Grundkörpers 102 ausgebildet.

Der Stützabschnitt 104 ist an einem Ende des Grundkörpers angeordnet und definiert in Längsrichtung, d.h. in Richtung der Längsachse 110, einen Pressabschnitt mit einer Presslänge 114. Der Stützabschnitt 104 weist ferner radial außen mehrere Rillen 116 auf, die sich in Umfangsrichtung erstrecken. Durch die Rillen 116 werden Stege 118 definiert, die ebenfalls in Umfangsrichtung und parallel zueinander verlaufen. Der Stützabschnitt 104 kann in ein Rohrende des Rohrs geschoben werden, so dass das Rohrende den Stützabschnitt 104 umschließt.

Der Gewindeabschnitt 106 weist ein Außengewinde 120 auf. Die Basisabschnitt 108, der Gewindeabschnitt 106 und der Stützabschnitt 104 weisen im Wesentlichen den gleichen Kerndurchmesser auf.

Das Anschlussstück 100 umfasst ferner ein Anschlagelement 122. Das Anschlagelement 122 ist auf den Grundkörper 102 aufschiebbar und lösbar mit dem Grundkörper 102 verbindbar, insbesondere verrastbar und/oder verschraubbar. Das Anschlagelement 122 ist ringförmig als Anschlagring bzw. Anschlaghülse mit einem Durchlass 124 ausgebildet. Ferner weist das Anschlagelement im Bereich des Durchlasses 124 einen Gewindeabschnitt 126 mit einem Innengewinde 128 auf. Das Innengewinde 128 des Anschlagelements 122 ist mit dem Außengewinde 120 des Gewindeabschnitts 106 des Grundkörpers 102 verschraubbar.

Das Anschlagelement 122 kann mittels des Durchlasses 124 auf den Grundkörper 102 aufgeschoben und entlang des Basisabschnitts bis zum Gewindeabschnitt 106 geschoben werden. Sodann kann durch Drehung des Anschlagelements 122 um die Längsachse 110 das Anschlagelement 122 mit dem Gewindeabschnitt 106 des Grundkörpers 102 durch Eingriff des Innengewindes 126 in das Außengewinde 120 verschraubt werden. Dies kann solange erfolgen, bis das Anschlagelement 122 mit dem Rohr bzw. einer Stirnfläche des Rohrendes, das den Stützabschnitt 104 umschließt, in Anschlag gelangt. Hierfür weist das Anschlagelement 122 eine ringförmige Anschlagfläche 130 auf, die ausgebildet ist, mit der Stirnfläche des Rohrendes zumindest abschnittsweise in Anschlag zu gelangen. Die Anschlagfläche 130 steht im Wesentlichen senkrecht zur Längsachse 110 und ist auf der dem Stützabschnitt 104 zugewandten Seite angeordnet.

Fig. 2 zeigt ein Anschlussstück 200 gemäß einer weiteren Variante. Im Gegensatz zu dem Anschlussstück 100 gemäß Fig. 1 ist der Grundkörper 202 des Anschlussstücks 200 im Wesentlichen T-förmig ausgebildet. Das Anschlussstück 200 weist ebenfalls einen Stützabschnitt 204, einen Gewindeabschnitt 206 und einen Basisabschnitt 208 auf, die konzentrisch zu Längsachse 210 sind. Ferner weist das Anschlussstück 200 ein Anschlagelement 212 auf, dass auf den Grundkörper 202 aufgeschoben ist.

Im Übrigen wird ergänzend insbesondere auf Fig. 1 und die zugehörige Beschreibung verwiesen.

Das Anschlussstück 200 bzw. der Grundkörper 202 weist zusätzlich zwei Anschlussabschnitte 214 zum Anschließen, insbesondere Anschweißen und/oder Verpressen, eines Rohrteils auf. Einer der beiden Anschlussabschnitte 214 (in Fig. 2 der linke Anschlussabschnitt) ist an einem dem Stützabschnitt 204 gegenüberliegenden Ende des Grundkörpers 202 angeordnet. Der andere der beiden Anschlussabschnitte 214 (in Fig. 2 der obere Anschlussabschnitt) ist im Wesentlichen senkrecht zu dem Stützabschnitt 204 angeordnet, so dass im Wesentlichen ein T-förmiges Anschlussstück 200 ausgebildet ist. Die beiden Anschlussabschnitte 214 können jeweils einen Pressabschnitt mit einer Presslänge definieren bzw. aufweisen. Die Presslängen der Anschlussabschnitte 214 können der Presslänge des Stützabschnitts 204 entsprechen. D.h., die Presslängen können gleich sein.

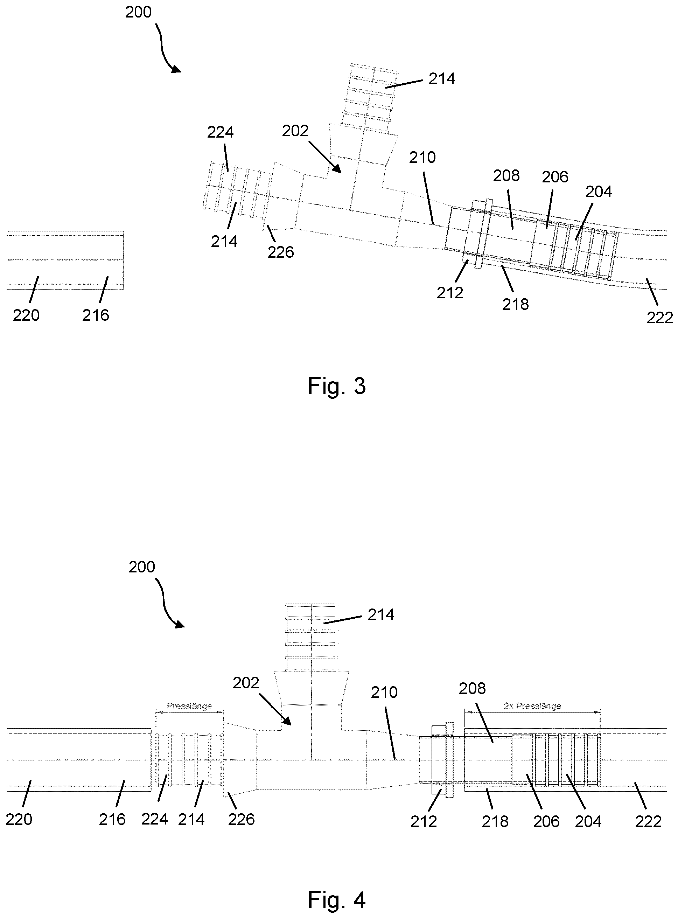

Ferner sind in Fig. 2 zwei gegenüberliegende Rohrenden 216, 218 zweier zu verbindenden Rohre 220, 222 dargestellt. Der Stützabschnitt 204 soll in dem vorliegenden Beispiel in das Rohrende 218 des Rohrs 22 eingeführt und der diesem gegenüberliegende Anschlussabschnitt 214 soll in das Rohrende 216 des Rohrs 220 eingeführt werden, um im Anschluss eine Verbindung, beispielsweise durch Verpressen, herzustellen. Da die beiden Rohrenden 216, 218 sehr nahe beieinander liegen und nur ein kleiner Bauraum zur Verfügung steht, könnte, im Gegensatz zu dem Anschlussstück der vorliegenden Erfindung, ein herkömmliches Anschlussstück in diesem Fall nicht montiert werden. Die Fign. 3 bis 6 veranschaulichen schematisch das Installationsverfahren des Anschlussstücks 200 zwischen den beiden Rohrenden 216, 218.

Fig. 3 zeigt das Anschlussstück 200, wobei der Stützabschnitt 204 in das Rohrende 218 des Rohrs 222 geschoben wurde. Dadurch, dass das Anschlagelement 212 des Anschlussstücks 220 entlang des Grundkörpers 202 bzw. entlang dessen Basisabschnitts 208 verschiebbar ist, kann dabei auch der Gewindeabschnitt 206 und der Basisabschnitt 208 zumindest abschnittsweise in das Rohrende 218 des Rohrs 222 geschoben werden, und zwar so weit, bis der dem Stützabschnitt 206 gegenüberliegende Anschlussabschnitt 214, wie in Fig. 4 dargestellt, im Wesentlichen konzentrisch und/oder mittig zum Rohrende 216 des Rohrs 220 ausgerichtet werden kann. Die Gesamteinschublänge des Stützabschnitts 204, Gewindeabschnitts 206 und Basisabschnitts 208 kann in etwa die zweifache durch den Stützabschnitt 204 definierte Presslänge betragen.

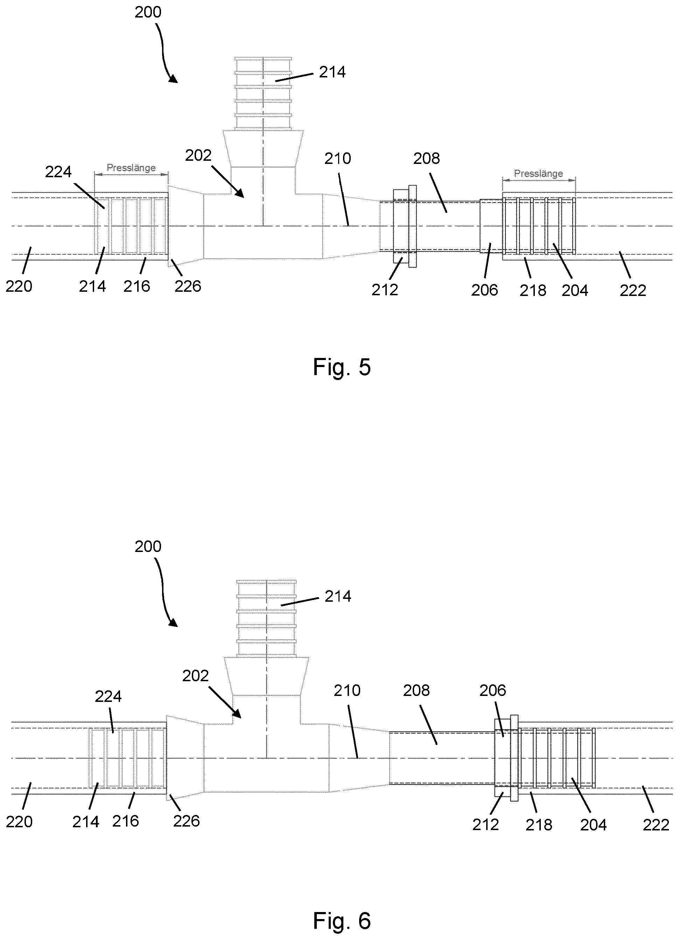

Sodann wird, wie in Fig. 5 dargestellt, der Einführabschnitt 224 des Anschlussabschnitt 214 in das Rohrende 216 des Rohrs 220 eingeführt, bis die Stirnfläche des Rohrendes 216 in Anschlag mit der Anschlagschulter 226 des Anschlussabschnitts 214 gelangt. Dabei wird der Basisabschnitt 208 und der Gewindeabschnitt 206 wieder aus dem Rohrende 218 des Rohrs 222 gezogen.

Dann wird das Anschlagelement 212 in Richtung zum Gewindeabschnitt 206 hin geschoben und sobald dieser erreicht wurde durch Drehung des Anschlagelements 212 um die Längsachse 210 mit dem Gewindeabschnitt 206 verschraubt bis die Anschlagfläche des Anschlagelements 212 in Anschlag mit der Stirnfläche des Rohrendes 218 des Rohrs 222 gelangt.

Im Anschluss kann, beispielsweise mittels einer Presshülse und einem Presswerkzeug, der Stützabschnitt 204 mit dem Rohrende 218 des Rohrs 222, insbesondere dichtend, verpresst werden. Dabei kann auch die Presshülse in Anschlag mit der Anschlagfläche des Anschlagelements 212 gelangen. Ebenso kann dann, beispielsweise mittels einer Presshülse und einem Presswerkzeug, der Einführabschnitt 224 mit dem Rohrende 216 des Rohrs 220, insbesondere dichtend, verpresst werden.

Im Übrigen wird ergänzend insbesondere auf Fig. 1 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch einzelne Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl aller Schritte des Verfahrens bzw. der Verfahren / Verwendungen kann variiert und/oder kombiniert werden. Die Verfahren / Verwendungen können miteinander kombiniert werden.

### Bezugszeichen

- 100: Anschlussstück
- 102: Grundkörper
- 104: Stützabschnitt
- 106: Gewindeabschnitt
- 108: Basisabschnitt
- 110: Längsachse
- 112: Durchlass
- 114: Presslänge
- 116: Rillen
- 118: Stege
- 120: Außengewinde
- 122: Anschlagelement
- 124: Durchlass
- 126: Gewindeabschnitt
- 128: Innengewinde
- 130: Anschlagfläche

- 200: Anschlussstück
- 202: Grundkörper
- 204: Stützabschnitt
- 206: Gewindeabschnitt
- 208: Basisabschnitt
- 210: Längsachse
- 212: Anschlagelement
- 214: Anschlussabschnitte
- 216: Rohrende
- 218: Rohrende
- 220: Rohr
- 222: Rohr
- 224: Einführabschnitt
- 226: Anschlagschulter

## Patentansprüche

1. Anschlussstück (100, 200) für ein Rohr (220, 222), insbesondere Kunststoffrohr oder Kunststoffverbundrohr, umfassend:
einen Grundkörper (102, 202) mit einem Basisabschnitt (108, 208) und mit zumindest einem Stützabschnitt (104, 204) zum Einführen in ein Rohrende (116, 118) des Rohrs (220, 222), wobei der Grundkörper (102, 202) zumindest einen Gewindeabschnitt (106, 206) mit einem Gewinde (120) aufweist, wobei der zumindest eine Gewindeabschnitt (106, 206) zwischen dem Basisabschnitt (108, 208) und dem zumindest einen Stützabschnitt (104, 204) angeordnet ist; und zumindest ein mit dem Grundkörper (102, 202) lösbar verbindbares Anschlagelement (122, 212), das eine Anschlagfläche (130) aufweist, die ausgebildet ist, mit einer Stirnfläche des Rohrendes (116, 118) zumindest abschnittsweise in Anschlag zu gelangen, wobei das zumindest eine Anschlagelement (122, 212) entlang des Basisabschnitts (108, 208) verschiebbar ausgebildet ist.

2. Anschlussstück (100, 200) nach Anspruch 1, **dadurch gekennzeichnet, dass** der zumindest eine Stützabschnitt (104, 204) an einem Ende des Grundkörpers (102, 202) angeordnet bzw. ausgebildet ist.

3. Anschlussstück (100, 200) nach wenigstens einem der vorhergehenden Ansprüche, **dadurch gekennzeichnet, dass** der zumindest eine Stützabschnitt (104, 204) ein Pressabschnitt ist und/oder eine Presslänge (114) definiert.

4. Anschlussstück (100, 200) nach wenigstens einem der vorhergehenden Ansprüche, **dadurch gekennzeichnet, dass** das zumindest eine Anschlagelement (122, 212) im Wesentlichen ringförmig und/oder hülsenförmig ausgebildet ist und/oder ein Anschlagring und/oder eine Anschlaghülse ist.

5. Anschlussstück (100, 200) nach wenigstens einem der vorhergehenden Ansprüche, **dadurch gekennzeichnet, dass** das zumindest eine Anschlagelement (122, 212) mit dem Grundkörper (102, 202) verrastbar und/oder verschraubbar ist und/oder verrastet und/oder verschraubt ist.

6. Anschlussstück (100, 200) nach wenigstens einem der vorhergehenden Ansprüche, **dadurch gekennzeichnet, dass** das Gewinde (120) ein Außengewinde (120) ist.

7. Anschlussstück (100, 200) nach wenigstens einem der vorhergehenden Ansprüche, **dadurch gekennzeichnet, dass** das zumindest eine Anschlagelement (122, 212) entlang des Grundkörpers (102, 202) verschiebbar ausgebildet ist und/oder auf den Grundkörper (102, 202) aufgeschoben ist oder aufgeschoben werden kann.

8. Anschlussstück (100, 200) nach wenigstens einem der vorhergehenden Ansprüche, **dadurch gekennzeichnet, dass** das zumindest eine Anschlagelement (122, 212) einen Gewindeabschnitt (126) mit einem Gewinde (128), insbesondere Innengewinde (128), aufweist, und/oder dass das Gewinde (126) des zumindest einen Anschlagelements (122, 212) mit dem Gewinde (120) des Grundkörpers (102, 202) verschraubbar und/oder verschraubt ist.

9. Anschlussstück (100, 200) nach wenigstens einem der vorhergehenden Ansprüche, **dadurch gekennzeichnet, dass** der Grundkörper (102, 202) zumindest zwei, insbesondere an gegenüberliegenden Enden des Grundkörpers (102, 202) angeordnete, Stützabschnitte (104, 204) aufweist und/oder zumindest zwei Anschlagelemente (122, 212) vorgesehen sind, wobei jedem Stützabschnitt (104, 204) ein Anschlagelement (122, 212) zugeordnet ist.

10. Anschlussstück (100, 200) nach wenigstens einem der vorhergehenden Ansprüche, **dadurch gekennzeichnet, dass** der Grundkörper (102, 202) zumindest ein Anschlussabschnitt (214) zum Anschließen, insbesondere Anschweißen und/oder Verpressen, eines Rohrteils aufweist.

11. Anschlussstück (100, 200) nach Anspruch 10, **dadurch gekennzeichnet, dass** der zumindest eine Anschlussabschnitt (214) des Grundkörpers (102, 202) an einem dem zumindest einen Stützabschnitt (104, 204) gegenüberliegenden Ende des Grundkörpers (102, 202) oder im Wesentlichen senkrecht zu dem zumindest einen Stützabschnitt (104, 204) angeordnet ist.

12. Fitting, insbesondere Pressfitting, zum Verbinden mit mindestens einem Rohr (220, 222), insbesondere Kunststoffrohr oder Kunststoffverbundrohr, umfassend zumindest ein Anschlussstück (100, 200) nach wenigstens einem der vorhergehenden Ansprüche und zumindest eine Hülse, wie Presshülse, die mit dem zumindest einen Stützabschnitt (104, 204) des Grundkörpers (102, 202) und/oder mit dem Rohrende (216, 218) des Rohrs (220, 222) verpressbar ist.

13. Verwendung eines Anschlussstücks (100, 200) nach wenigstens einem der vorhergehenden Ansprüche 1 bis 11 und/oder eines Fittings nach Anspruch 12 zum Verbinden mit wenigstens einem Rohr (220, 222), insbesondere Kunststoffrohr oder Kunststoffverbundrohr.

14. Verwendung nach Anspruch 13, wobei das Verbinden, insbesondere Verschrauben, des zumindest einen Anschlagelements (122, 212) mit dem Grundkörper (102, 202) nach dem Einführen des zumindest einen Stützabschnitts (104, 204) in das Rohrende (216, 218) des Rohrs (220, 222) erfolgt und/oder wobei das Rohr (220, 222), insbesondere das Rohrende (216, 218) des Rohrs (220, 222), mittels der Hülse mit dem zumindest einen Stützabschnitt (104, 204) des Grundkörpers (102, 202) verpresst wird.

15. Verwendung eines Anschlussstücks (100, 200) zum Verbinden mit wenigstens einem Rohr (220, 222), insbesondere Kunststoffrohr oder Kunststoffverbundrohr, umfassend: einen Grundkörper (102, 202) mit zumindest einem Stützabschnitt (104, 204) zum Einführen in ein Rohrende (116, 118) des Rohrs (220, 222), und zumindest ein mit dem Grundkörper (102, 202) lösbar verbindbares Anschlagelement (122, 212), das eine Anschlagfläche (130) aufweist, die ausgebildet ist, mit einer Stirnfläche des Rohrendes (116, 118) zumindest abschnittsweise in Anschlag zu gelangen, wobei das Verbinden, insbesondere Verschrauben, des zumindest einen Anschlagelements (122, 212) mit dem Grundkörper (102, 202) nach dem Einführen des zumindest einen Stützabschnitts (104, 204) in das Rohrende (216, 218) des Rohrs (220, 222) erfolgt.

## Claims

1. Connecting piece (100, 200) for a pipe (220, 222), in particular a plastic pipe or plastic composite pipe, comprising:
a base body (102, 202) with a base section (108, 208) and with at least one support section (104, 204) for insertion into a pipe end (116, 118) of the pipe (220, 222), wherein the base body (102, 202) has at least one threaded section (106, 206) with a thread (120), wherein the at least one threaded section (106, 206) is arranged between the base section (108, 208) and the at least one support section (104, 204); and at least one stop element (122, 212) releasably connectable to the base body (102, 202), which stop element has a stop surface (130) that is designed to come into abutment, at least in sections, with an end face of the pipe end (116, 118), wherein the at least one stop element (122, 212) being displaceable along the base section (108, 208).

2. Connecting piece (100, 200) according to claim 1, **characterized in that** the at least one support section (104, 204) is arranged or formed at one end of the base body (102, 202).

3. Connecting piece (100, 200) according to at least one of the preceding claims, **characterized in that** the at least one support section (104, 204) is a press section and/or defines a press length (114).

4. Connecting piece (100, 200) according to at least one of the preceding claims, **characterized in that** the at least one stop element (122, 212) is essentially ringshaped and/or sleeve-shaped and/or is a stop ring and/or a stop sleeve.

5. Connecting piece (100, 200) according to at least one of the preceding claims, **characterized in that** the at least one stop element (122, 212) can be locked and/or screwed and/or is locked and/or screwed to the base body (102, 202).

6. Connecting piece (100, 200) according to at least one of the preceding claims, **characterized in that** the thread (120) is an external thread (120).

7. Connecting piece (100, 200) according to at least one of the preceding claims, **characterized in that** the at least one stop element (122, 212) is designed to be displaceable along the base body (102, 202) and/or is pushed onto the base body (102, 202) or can be pushed onto the base body (102, 202).

8. Connecting piece (100, 200) according to at least one of the preceding claims, **characterized in that** the at least one stop element (122, 212) has a threaded section (126) with a thread (128), in particular an internal thread (128), and/or that the thread (126) of the at least one stop element (122, 212) can be screwed and/or is screwed to the thread (120) of the base body (102, 202).

9. Connecting piece (100, 200) according to at least one of the preceding claims, **characterized in that** the base body (102, 202) has at least two support sections (104, 204), in particular arranged at opposite ends of the base body (102, 202), and/or at least two stop elements (122, 212) are provided, wherein each support section (104, 204) is assigned a stop element (122, 212).

10. Connecting piece (100, 200) according to at least one of the preceding claims, **characterized in that** the base body (102, 202) has at least one connecting section (214) for connecting, in particular welding and/or pressing, a pipe part.

11. Connecting piece (100, 200) according to claim 10, **characterized in that** the at least one connecting section (214) of the base body (102, 202) is arranged at an end of the base body (102, 202) opposite the at least one support section (104, 204) or substantially perpendicular to the at least one support section (104, 204).

12. Fitting, in particular press fitting, for connecting to at least one pipe (220, 222), in particular a plastic pipe or plastic composite pipe, comprising at least one connecting piece (100, 200) according to at least one of the preceding claims and at least one sleeve, such as a press sleeve, which is pressable with the at least one support section (104, 204) of the base body (102, 202) and/or with the pipe end (216, 218) of the pipe (220, 222).

13. Use of a connecting piece (100, 200) according to at least one of the preceding claims 1 to 11 and/or a fitting according to claim 12 for connecting to at least one pipe (220, 222), in particular a plastic pipe or plastic composite pipe.

14. Use according to claim 13, wherein the connecting, in particular screwing, of the at least one stop element (122, 212) to the base body (102, 202) is performed after the insertion of the at least one support section (104, 204) into the pipe end (216, 218) of the pipe (220, 222) and/or wherein the pipe (220, 222), in particular the pipe end (216, 218) of the pipe (220, 222), is pressed by means of the sleeve against the at least one support section (104, 204) of the base body (102, 202).

15. Use of a connecting piece (100, 200) for connecting to at least a pipe (220, 222), in particular a plastic pipe or plastic composite pipe, comprising: a base body (102, 202) with at least one support section (104, 204) for insertion into a pipe end (116, 118) of the pipe (220, 222), and at least one stop element (122, 212) which can be detachably connected to the base body (102, 202) and has a stop surface (130) which is designed to come into abutment, at least in sections, with an end face of the pipe end (116, 118), wherein the connecting, in particular the screwing, of the at least one stop element (122, 212) to the base body (102, 202) takes place after the insertion of the at least one support section (104, 204) into the pipe end (216, 218) of the pipe (220, 222).

## Revendications

1. Pièce de raccord (100, 200) pour un tube (220, 222), en particulier un tube en plastique ou un tube composite en plastique, comprenant :
un corps de base (102, 202) avec une partie de base (108, 208) et avec au moins une partie de support (104, 204) destinée à être introduite dans une extrémité de tube (116, 118) du tube (220, 222), le corps de base (102, 202) comportant au moins une partie filetée (106, 206) avec un filetage (120), la au moins une partie filetée (106, 206) étant disposée entre la partie de base (108, 208) et la au moins une partie de support (104, 204) ; et
au moins un élément de butée (122, 212) pouvant être relié de manière amovible au corps de base (102, 202), qui présente une surface de butée (130) qui est conçue pour venir en butée au moins par sections avec une surface frontale de l'extrémité de tube (116, 118), le au moins un élément de butée (122, 212) étant agencé de manière à pouvoir coulisser le long de la partie de base (108, 208).

2. Pièce de raccord (100, 200) selon la revendication 1, **caractérisé en ce que** la au moins une partie de support (104, 204) est disposée ou formée à une extrémité du corps de base (102, 202).

3. Pièce de raccord (100, 200) selon au moins l'une des revendications précédentes, **caractérisé en ce que** la au moins une partie de support (104, 204) est une partie de pression et/ou définit une longueur de pression (114).

4. Pièce de raccord (100, 200) selon au moins l'une des revendications précédentes, **caractérisé en ce que** le au moins un élément de butée (122, 212) est essentiellement de forme annulaire et/ou tubulaire et/ou est une bague de butée et/ou un manchon de butée.

5. Pièce de raccord (100, 200) selon au moins l'une des revendications précédentes, **caractérisé en ce que** le au moins un élément de butée (122, 212) peut être encliqueté et/ou vissé avec le corps de base (102, 202) et/ou est encliqueté et/ou vissé.

6. Pièce de raccord (100, 200) selon au moins l'une des revendications précédentes, **caractérisé en ce que** le filetage (120) est un filetage extérieur (120).

7. Pièce de raccord (100, 200) selon au moins l'une des revendications précédentes, **caractérisée en ce que** le au moins un élément de butée (122, 212) est conçu de manière à pouvoir coulisser le long du corps de base (102, 202) et/ou est emboîté ou peut être emboîté sur le corps de base (102, 202).

8. Pièce de raccord (100, 200) selon au moins l'une des revendications précédentes, **caractérisé en ce que** le au moins un élément de butée (122, 212) présente une partie filetée (126) avec un filetage (128), en particulier un filetage intérieur (128), et/ou **en ce que** le filetage (126) du au moins un élément de butée (122, 212) peut être vissé et/ou est vissé avec le filetage (120) du corps de base (102, 202).

9. Pièce de raccord (100, 200) selon au moins l'une des revendications précédentes, **caractérisée en ce que** le corps de base (102, 202) comporte au moins deux parties de support (104, 204) disposées en particulier aux extrémités opposées du corps de base (102, 202) et/ou au moins deux éléments de butée (122, 212) sont prévus, un élément de butée (122, 212) étant associé à chaque partie de support (104, 204).

10. Pièce de raccord (100, 200) selon au moins l'une des revendications précédentes, **caractérisée en ce que** le corps de base (102, 202) comporte au moins une partie de raccordement (214) pour raccorder, en particulier souder et/ou presser, une pièce tubulaire.

11. Pièce de raccord (100, 200) selon la revendication 10, **caractérisée en ce que** la au moins une partie de raccordement (214) du corps de base (102, 202) est réalisée à une extrémité du corps de base (102, 202) opposée à la au moins une partie de support (104, 204) ou sensiblement perpendiculairement à la au moins une partie de support (104, 204) du corps de base (102, 202).

12. Raccord, en particulier raccord à sertir, destiné à être raccordé à au moins un tube (220, 222), en particulier un tube en matière plastique ou un tube composite en matière plastique, comprenant au moins une pièce de raccord (100, 200) selon au moins l'une des revendications précédentes et au moins une douille, telle qu'une douille à sertir, qui est reliée à la au moins une partie de support (104, 204) du corps de base (102, 202) et/ou avec l'extrémité de tube (216, 218) du tube (220, 222).

13. Utilisation d'une pièce de raccord (100, 200) selon au moins l'une des revendications précédentes 1 à 11 et/ou d'un raccord selon la revendication 12 pour raccorder au moins un tube (220, 222), en particulier un tube en plastique ou un tube composite en plastique.

14. Utilisation selon la revendication 13, dans laquelle la liaison, en particulier le vissage, du au moins un élément de butée (122, 212) avec le corps de base (102, 202) après l'introduction de la au moins une partie de support (104, 204) dans l'extrémité de tube (216, 218) du tube (220, 222) et/ou dans lequel le tube (220, 222), en particulier l'extrémité de tube (216, 218) du tube (220, 222), est pressé au moyen de la douille avec la au moins une partie de support (104, 204) du corps de base (102, 202).

15. Utilisation d'une pièce de raccord (100, 200) pour le raccordement à au moins un tube (220, 222), en particulier un tube en plastique ou un tube composite en plastique,
comprenant : un corps de base (102, 202) avec au moins une partie de support (104, 204) pour l'insertion dans une extrémité de tube (116, 118) du tube (220, 222), et au moins un élément de butée (122, 212) pouvant être relié de manière amovible au corps de base (102, 202), qui présente une surface de butée (130) conçue pour venir en butée, au moins par sections, avec une surface frontale de l'extrémité de tube (116, 118) au moins par sections, la liaison, en particulier le vissage, de l'au moins un élément de butée (122, 212) avec le corps de base (102, 202) s'effectuant après l'introduction de l'au moins une partie de support (104, 204) dans l'extrémité de tube (216, 218) du tube (220, 222).
